# FASCICULE DE BREVET EUROPEEN

(11) **EP 1 113 160 B1**
(45) Date de publication et mention de la délivrance du brevet: **02.05.2007**
(21) Numéro de dépôt: 99204575.7
(22) Date de dépôt: 28.12.1999
(51) Int. Cl.: F02C 9/00, F02C 9/28

(54) **Dispositif de commande d'une machine placée sur un banc d'essai**
Steuerungsvorrichtung für eine Maschine auf einem Prüfstand
Control apparatus for a machine placed on a test bench

(43) Date de publication de la demande: 04.07.2001
(73) Titulaire: Techspace Aero, 4041 Milmort Herstal (BE)
(72) Inventeur: Graindorge, Stéphane René Marie, 4000 Liege (BE); Malbrouck, Robert Lambert Gilbert, 4432 Alleur (BE); Rousseau, Stéphane Luc Emile, 4458 Fexhe-slins (BE)
(74) Mandataire: Nguyen, Dominique

(56) Documents cités:
- EP-A- 0 047 582
- FR-A- 2 680 386
- GB-A- 1 311 841
- GB-A- 1 590 430
- US-A- 2 740 483
- US-A- 4 686 825

## Description

L'invention concerne un dispositif de commande d'une machine placée sur un banc d'essai.

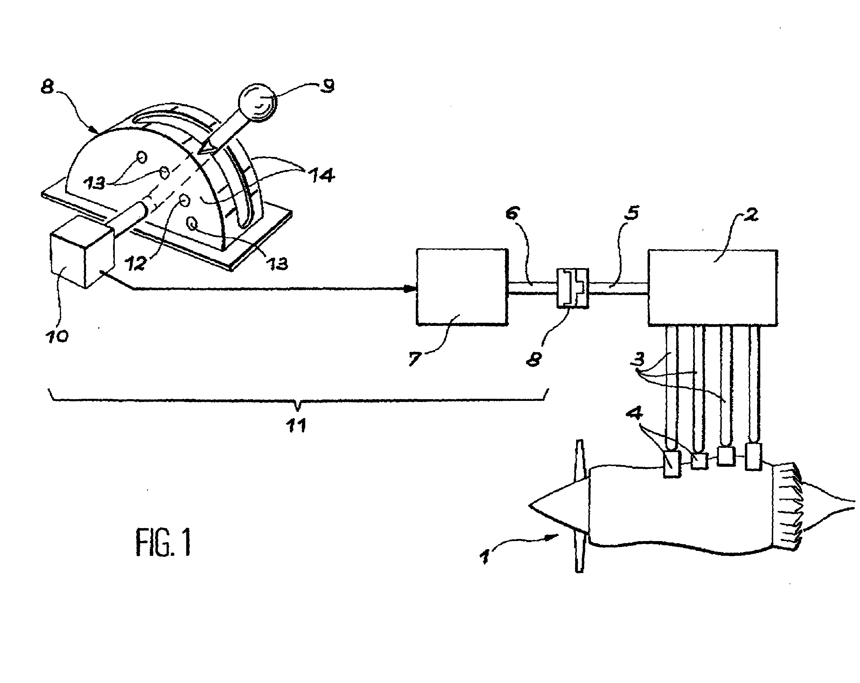

Quand une machine 1 telle que le turboréacteur de la figure 1 est soumise à un essai au cours duquel il faut faire varier son état de fonctionnement, notamment son régime, on peut utiliser un régulateur 2 hydromécanique qui entraîne des dispositifs non représentés en détail tels que des cames 3, pour déplacer de la quantité voulue des vannes, soupapes ou d'autres pièces 4 de réglage de la machine 1. Le régulateur 2 comprend un arbre d'entrée 5 auquel sont fixées les cames 3 et qui est relié à un arbre de sortie 6 d'un actionneur 7 comportant un moteur pas à pas et un moyen de commande de ce moteur comme une boucle PID (proportionnelle, intégrale et différentielle), par un dispositif de transmission 8 pouvant être un cardan ou un câble souple mais très rigide en torsion. L'actionneur 7 est commandé manuellement par l'intermédiaire d'un levier 9 analogue à ceux qu'on trouve sur les aéronefs pour commander les gaz et dont le basculement modifie un capteur tel qu'un potentiomètre 10 qui commande le fonctionnement de l'actionneur 7. Tout basculement du levier 9 provoque donc une rotation proportionnelle des arbres 6 et 5. L'ensemble formé par l'actionneur 7, le levier 9 et le potentiomètre 10 constitue ce qu'on appelle la manette de commande 11 de la machine 1. Tels sont les organes de pilotage du banc d'essai, qui comprend encore des capteurs posés sur la machine 1 et des dispositifs daffichage et de visualisation des capteurs, ainsi qu'il est bien connu ; mais ces organes sont distincts de l'invention et n'ont pas été représentés.

Il existe quelques variantes de ce dispositif de base : c'est ainsi que le régulateur hydromécanique 2 peut être remplacé par un régulateur électronique qui commande les déplacements des mécanismes agissant sur les pièces 4 au moyen de signaux électroniques qui lui sont fournis par un autre actionneur, sans qu'il y ait d'accouplement entre des arbres tournants. Des résolveurs peuvent ainsi être utilisés pour estimer l'angle de rotation du levier 9.

Les dispositifs connus ont l'inconvénient qu'il est difficile de commander l'état voulu avec précision et sûreté, et qu'il est impossible de placer la machine 1 dans certaines situations telles que des régimes transitoires et des oscillations rapides de régime. Une maladresse ou une inattention de l'opérateur peut aussi produire un régime excessif qui détériore la machine 1. C'est pourquoi on a eu l'idée de disposer des butées mécaniques pour le levier 9, comme des axes 12 engagés dans des perçages 13 percés au travers de joues 14 qui encadrent le levier 9 et sa course de basculement, mais cette disposition n'offre pas une sûreté totale. Enfin, une manette de commande 11 est en général associée à l'essai d'une machine 1 déterminée et doit être changée ou calibrée, de façon dispendieuse, quand on veut essayer une machine 1 de genre différent.

C'est pourquoi on a entrepris, conformément à cette invention, de perfectionner les bancs d'essai en modifiant le dispositif de commande de la machine pour la rendre apte à communiquer des états de fonctionnement plus complexes et avec une précision plus grande tout en améliorant la sécurité de l'essai.

Des dispositifs de contrôle de turbomachine selon l'art antérieur sont décrits dans les documents

US 4 686 825, FR 2 680 386 et FR 2 576 973.

Toutefois, ces dispositifs n'apportent pas une sécurité suffisante.

L'effort inventif réalisé ici peut d'abord être trouvé dans la constatation que le levier de commande 9 inspiré du levier de gaz traditionnel n'était pas spécialement adapté aux conditions spécifiques d'essai et pouvait être remplacé par d'autres dispositifs plus performants.

La manette des gaz proposé comprend désormais un générateur d'un signal de consigne conçu pour élaborer un signal de consigne et le transmettre à l'organe d'actionnement en fonction du signal de commande et d'au moins un signal additionnel ; ce générateur est placé entre l'actionneur et l'organe de commande de l'état de la machine tel que le levier 9. Le signal de consigne peut être déterminé soit par le signal de commande et le signal additionnel, soit par le signal additionnel seul, soit par le signal de commande seul. Dans le premier cas, le signal additionnel sera souvent un signal de régulation qui maintiendra la machine à un régime satisfaisant, conformément à une condition voulue pour l'essai ou au-dessous d'un régime dangereux. Dans le deuxième cas, le signal additionnel pourra être un signal déclenché par le signal de commande et régissant un cycle complet, défini à l'avance, d'essai de la machine, ou un signal de secours émis si le signal de commande vient à manquer, ou encore un signal d'urgence commandant le retour de la machine à un état d'arrêt ou de ralenti. Le troisième cas est celui d'un signal additionnel recueilli mais inopérant, ou inactif ; la manette pourra éventuellement passer au fonctionnement du premier ou du deuxième cas, si les circonstances l'exigent.

La transformation de la manette de commande opérée grâce à l'addition du générateur de signal de consigne offre plusieurs avantages : il devient possible de commander des conditions d'essai trop complexes (cycles déterminés, états d'oscillation, etc.) avec une commande manuelle ; des états inadmissibles ou dangereux de la machine peuvent être interdits ; la commande peut provenir de divers organes (levier, bouton-poussoir, clavier d'ordinateur, etc.), voire de plusieurs organes actionnés successivement si les circonstances le rendent utile ; et l'organe manuel de commande peut être exploité pour produire une commande incrémentale de variation d'état de la machine plutôt qu'une commande d'état de la machine, ce qui est habituel mais moins commode.

Ces caractéristiques et avantages peuvent être recherchés simultanément ou non, selon les exigences de l'essai et la réalisation effective de la manette.

L'invention sera maintenant décrite plus complètement en référence aux figures, dont la figure 1 déjà décrite représente un exemple de dispositif de commande de l'art antérieur, la figure 2 représente une manette de commande conforme à l'invention, et la figure 3 représente les composants internes de l'actionneur.

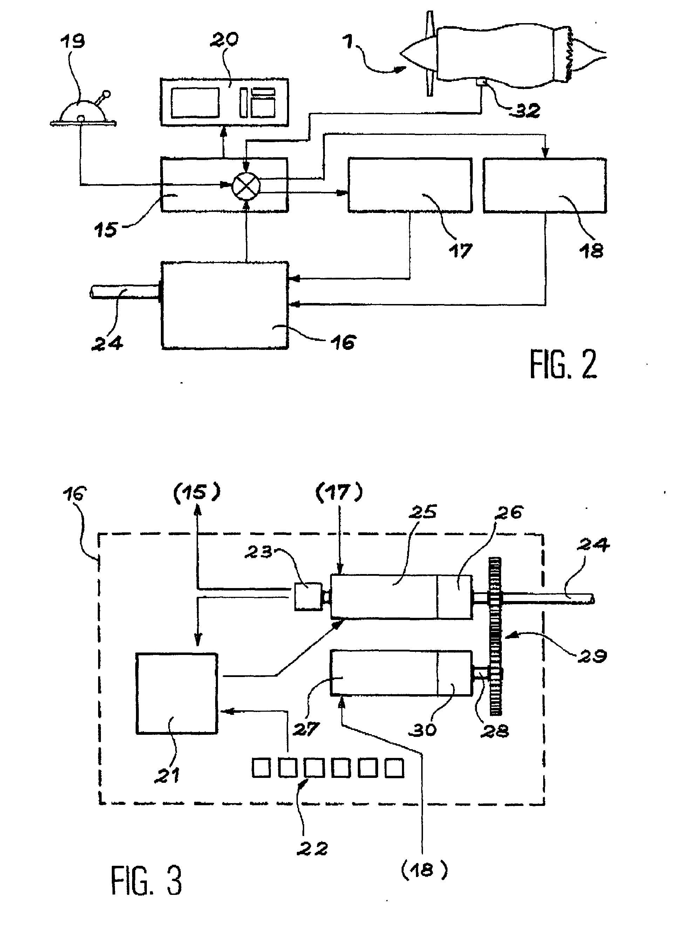

La manette de commande de la figure 2 comprend une unité centrale 15 qui commande un actionneur 16 directement ou par l'intermédiaire d'un amplificateur principal 17 ou d'un amplificateur d'urgence 18, utilisé en cas de besoin pour suppléer au précédent, notamment en cas de panne ou d'incident et qui ramène automatiquement la machine 1 à l'état de ralenti quand il est en service. L'unité centrale 15 dépend d'un dispositif de commande d'état 19, et elle est également reliée à un panneau de contrôle 20. Le dispositif 19 peut être un levier 9 à potentiomètre comme celui qu'on a déjà rencontré, mais il peut aussi consister en un manche à balai, une souris, un clavier, une liaison par radio ou une liaison par câble de réseau informatique local. Plusieurs de ces dispositifs peuvent être branchés à la fois à l'unité centrale 15, avec la possibilité de choisir celui qui est actif. La commande d'état de la machine 1 introduite par ce dispositif 19 est soit une commande directe d'état, soit une commande incrémentale dans laquelle on introduit la quantité de variation d'état, c'est-à-dire la rotation supplémentaire de l'actionneur 16 qu'on souhaite communiquer. Le panneau de contrôle 20 est destiné à la visualisation des conditions de l'essai et peut servir d'aide à la manipulation du dispositif 19.

L'unité centrale 15 est conçue pour produire un signal de consigne qu'elle applique à l'actionneur 16 en fonction d'un signal d'entrée fourni par le dispositif 19 et d'un signal additionnel qui peut provenir de sources diverses. La combinaison du signal d'entrée et du signal additionnel peut prendre des formes différentes selon les besoins. Le signal additionnel peut être un signal défini auparavant et conservé dans une mémoire de l'unité centrale 15, et qui est fourni à l'actionneur 16 quand le dispositif 19 est utilisé. Il peut prendre l'aspect d'un signal de rétroaction ou de régulation originaire de l'actionneur 16 et plus spécialement d'un capteur 23 de celui-ci, comme on le décrira plus loin. Il peut aussi provenir d'un capteur 32 lié à la machine 1 et y mesurant une température, une pression ou un autre phénomène physique ; il peut alors servir à maintenir immobile le régulateur 2, à modérer les conditions de l'essai, où à l'arrêter en commandant un retour rapide, entre autres possibilités.

On aborde maintenant la description de l'actionneur 16 à l'aide de la figure 3. Il comprend une carte électronique 21 de retour d'urgence qu'il est possible de commander par des boutons de calibration 22, mais qui est aussi sensible aux indications d'un capteur de position analogique 23 relié à l'arbre 24 (analogue à l'arbre 6 précédent) d'un moteur pas à pas principal 25. La carte 21 commande le mouvement du moteur principal 25 pour lui imposer des rotations voulues par la calibration ou pour le ramener à une position admissible, quand le capteur 23 lui fait juger qu'elle a été dépassée. Comme le capteur 23 permet de connaître la position angulaire de l'arbre 5 du régulateur, son signal est aussi exploité par l'unité centrale 15 le cas échéant, pour asservir la commande de la machine 1 à des conditions déterminées. Un moteur auxiliaire 27 peut aussi entraîner l'arbre 24, grâce à un engrenage 29 qui relie son propre arbre de sortie 28 à l'arbre 24- Les moteurs 25 et 27 sont munis de réducteurs 26 et 30. Le moteur auxiliaire 27 sert à piloter le régulateur en cas d'urgence par un signal de secours fourni par l'unité centrale 15.

L'invention pourrait aussi être adaptée à des régulateurs électroniques, soit en montant un résolveur sur l'arbre 24 pour fournir les signaux nécessaires à la régulation, ou encore en remplaçant les moteurs par un dispositif électronique qui fournirait directement les signaux au régulateur. Concrètement, l'actionneur 16 serait alors un générateur de tension analogique sous forme d'une porteuse sinusoïdale modulée en fonction du cosinus et du sinus de l'angle de consigne.

Une commande de retour au ralenti peut aussi être appliquée par l'opérateur, par une manette spéciale liée à la carte 21. D'autres dysfonctionnements du banc peuvent être à l'origine d'un retour au ralenti.

On a vu qu'il était possible de supprimer le dispositif de commande manuelle pour le remplacer par une commande logique, qui présente l'avantage de ne pas être sensible au bruit et de donner des possibilités plus nombreuses de fonctionnement, parmi lesquelles on peut citer la calibration automatique, le ciblage automatique d'un état de la machine, la création de cycles par une source externe ou dans l'unité centrale 15, la régulation du régime, la vibration automatique, la consultation de sources externes, et l'ajustement par l'opérateur de certains paramètres dressai.

## Revendications

1. Dispositif de commande d'une machine (1) placée sur un banc d'essai comportant :
• une unité centrale (15),
• un actionneur (16) relié en sortie de l'unité centrale (15) et
• un dispositif de commande d'état (19) délivrant un signal de commande à l'unité centrale (15),
l'unité centrale (15) délivrant un signal de consigne à l'actionneur (16) en fonction du signal de commande et d'au moins un signal additionnel **caractérisé en ce que** l'actionneur (16) comprend un moteur principal (25) sur lequel agit au moins le signal de commande et un moteur auxiliaire (27) sur lequel agit ledit signal additionnel, le moteur principal (25) et le moteur auxiliaire (27) étant reliés à un arbre de sortie (24) de l'actionneur (16) par des transmissions (26,30) comprenant un engrenage (29) entre ledit arbre de sortie (24) de l'actionneur (16) et un arbre de sortie (28) du moteur auxiliaire (27).

2. Dispositif de commande selon la revendication 1, **caractérisé en ce que** le signal additionnel est un signal prédéfini déclenché par le signal de commande.

3. Dispositif de commande selon la revendication 2, **caractérise en ce que** le signal prédéfini est un signal définissant un cycle de fonctionnement de la machine.

4. Dispositif de commande selon la revendication 1, **caractérisé en ce que** le signal additionnel est un signal provenant d'un capteur (23, 32).

5. Dispositif de commande selon la revendication 4, **caractérisé en ce que** le capteur est un capteur (32) mesurant un paramètre de fonctionnement de la machine.

6. Dispositif de commande selon la revendication 4, **caractérisé en ce que** le capteur est un capteur (23) de position de l'actionneur.

7. Dispositif de commande selon la revendication 1, **caractérisé en ce que** le signal additionnel est un signal de secours.

8. Dispositif de commande selon la revendication 1, **caractérisé en ce que** le signal additionnel est un signal de retour rapide à un état d'arrêt ou de ralenti de la machine.

9. Dispositif de commande selon la revendication 1, **caractérisé en ce que** le signal de commande est un signal incrémental.

10. Dispositif de commande selon l'une quelconque des revendications précédentes **caractérisé en ce que** l'actionneur (16) comporte une carte électronique (21) de retour d'urgence.

11. Dispositif de commande selon la revendication 10 **caractérisé en ce que** la carte électronique (21) est commandable par des boutons de calibration 22.

12. Dispositif de commande selon les revendications 10 ou 11 **caractérisé en ce que** la carte électronique (21) est sensible aux indications du capteur de position (23) relié à l'arbre (24).

13. Banc d'essai comportant un régulateur (2) et un dispositif de commande selon l'une quelconque des revendications précédentes **caractérisé en ce que** l'arbre de sortie (24) de l'actionneur (16) est relié à un arbre d'entrée (5) du régulateur (2).

## Claims

1. Control apparatus for a machine (1) placed on a test bench, comprising:
• a central processing unit (15),
• an actuator (16) connected to the output of the central processing unit (15) and
• a state control apparatus (19) sending a control signal to the central processing unit (15),
which central processing unit (15) sends a set-point signal to the actuator (16) as a function both of the control signal and of at least one additional signal, said apparatus being **characterized in that** the actuator (16) comprises a main motor (25) acted upon by at least the control signal, and an auxiliary motor (27) acted upon by the said additional signal, the main motor (25) and the auxiliary motor (27) being connected to an output shaft (24) of the actuator (16) by drives (26, 30) comprising gears (29) between the said output shaft (24) of the actuator (16) and an output shaft (28) of the auxiliary motor (27).

2. Control apparatus according to Claim 1, **characterized in that** the additional signal is a predefined signal triggered by the control signal.

3. Control apparatus according to Claim 2, **characterized in that** the predefined signal is a signal defining an operating cycle of the machine.

4. Control apparatus according to Claim 1, **characterized in that** the additional signal is a signal from a sensor (23, 32).

5. Control apparatus according to Claim 4, **characterized in that** the sensor is a sensor (32) measuring an operating parameter of the machine.

6. Control apparatus according to Claim 4, **characterized in that** the sensor is a sensor (23) of the position of the actuator.

7. Control apparatus according to Claim 1, **characterized in that** the additional signal is a backup signal.

8. Control apparatus according to Claim 1, **characterized in that** the additional signal is a signal to bring the machine quickly to a stop or to a state of idle.

9. Control apparatus according to Claim 1, **characterized in that** the control signal is an incremental signal.

10. Control apparatus according to any one of the preceding claims, **characterized in that** the actuator (16) comprises an electronic emergency return card (21).

11. Control apparatus according to Claim 10, **characterized in that** the electronic card (21) is controllable by calibration buttons (22).

12. Control apparatus according to Claim 10 or 11, **characterized in that** the electronic card (21) is sensitive to the indications of the position sensor (23) connected to the shaft (24).

13. Test bench comprising a regulator (2) and a control apparatus according to any one of the preceding claims, **characterized in that** the output shaft (24) of the actuator (16) is connected to an input shaft (5) of the regulator (2).

## Patentansprüche

1. Steuerungsvorrichtung für eine Maschine (1) auf einem Prüfstand, bestehend aus
• einer Zentraleinheit (15),
• ein Betätigungsgerät (16), das am Ausgang der Zentraleinheit (15) angeschlossen ist, und
• eine Zustandssteuerungsvorrichtung (19), die ein Steuersignal an die Zentraleinheit (15) abgibt,
wobei die Zentraleinheit (15) an das Betätigungsgerät (16) ein Befehlssignal in Abhängigkeit von dem Steuersignal sowie mindestens ein zusätzliches Signal abgibt,
**dadurch gekennzeichnet,**
**dass** das Betätigungsgerät (16) einen Hauptmotor (25) umfasst, auf den mindestens das Steuersignal einwirkt, sowie einen Zusatzmotor (27), auf den das genannte zusätzliche Signal einwirkt, wobei der Hauptmotor (25) und der Zusatzmotor (27) mit einer Abtriebswelle (24) des Betätigungsgeräts (16) verbunden sind, und zwar durch Übertragungen (26, 30), die ein Getriebe (29) zwischen dieser Abtriebswelle (24) des Betätigungsgeräts (16) und einer Abtriebswelle (28) des Zusatzmotors (27) umfassen.

2. Steuerungsvorrichtung nach Anspruch 1,
**dadurch gekennzeichnet,**
**dass** das zusätzliche Signal ein vorab bestimmtes Signal ist, das durch das Steuersignal ausgelöst wird.

3. Steuerungsvorrichtung nach Anspruch 2,
**dadurch gekennzeichnet,**
**dass** das vorab bestimmte Signal ein Signal ist, das einen Arbeitszyklus der Maschine bestimmt.

4. Steuerungsvorrichtung nach Anspruch 1,
**dadurch gekennzeichnet,**
**dass** das zusätzliche Signal ein Signal ist, das von einem Sensor (23, 32) stammt.

5. Steuerungsvorrichtung nach Anspruch 4,
**dadurch gekennzeichnet,**
**dass** der Sensor ein Sensor (32) ist, der einen Betriebsparameter der Maschine misst.

6. Steuerungsvorrichtung nach Anspruch 4,
**dadurch gekennzeichnet,**
**dass** der Sensor ein Positionssensor (23) des Betätigungsgeräts ist.

7. Steuerungsvorrichtung nach Anspruch 1,
**dadurch gekennzeichnet,**
**dass** das zusätzliche Signal ein Not-Signal ist.

8. Steuerungsvorrichtung nach Anspruch 1,
**dadurch gekennzeichnet,**
**dass** das zusätzliche Signal ein Signal zum Schnellrückschalten in einen Stillstand oder Leerlauf der Maschine ist.

9. Steuerungsvorrichtung nach Anspruch 1,
**dadurch gekennzeichnet,**
**dass** das Steuersignal ein Inkrementalsignal ist.

10. Steuerungsvorrichtung nach einem der vorherigen Ansprüche,
**dadurch gekennzeichnet,**
**dass** das Betätigungsgerät (16) eine Elektronikkarte (21) für den Notrücklauf aufweist.

11. Steuerungsvorrichtung nach Anspruch 10,
**dadurch gekennzeichnet,**
**dass** die Elektronikkarte (21) durch Druckschalter(22)steuerbar ist.

12. Steuerungsvorrichtung nach den Ansprüchen 10 oder 11,
**dadurch gekennzeichnet,**
**dass** die Elektronikkarte (21) auf Angaben des mit der Welle (24) verbundenen Positionssensors (23) anspricht.

13. Prüfstand mit einer Reguliereinrichtung (2) und einer Steuerungsvorrichtung nach einem der vorherigen Ansprüche,
**dadurch gekennzeichnet,**
**dass** die Abtriebswelle (24) des Betätigungsgeräts (16) mit einer Antriebswelle (5) der Reguliereinrichtung (2) verbunden ist.
